# EUROPEAN PATENT APPLICATION

(11) **EP 1 755 210 A1**
(43) Date of publication of application: **21.02.2007**
(21) Application number: 06119233.2
(22) Date of filing: 21.08.2006
(51) Int. Cl.: H02P 6/00, G05B 23/02

(54) **Device simulating operation of a machine that functions as either a motor or a generator**

(30) Priority: 19.08.2005 US 206750
(71) Applicant: HONEYWELL INC., Morristown, New Jersey 07962 (US)
(72) Inventor: Cheng, Louis, Richmond Hill Ontario ON L4B 3E4 (CA); Xu, Yonghui, Mississauga Ontario On L5C 4S7 (CA)
(74) Representative: Haley, Stephen

(57) **Abstract**

A simulator (12) having at least one input (24) and first and second outputs (30, 34) includes an inverter model (22) receiving gating signals at the at least one input (24) and producing current and voltage signals based on said gating signals and a machine model (26) receiving the current and voltage signals from the inverter model (24) and producing a machine current signal at the first output (30) and a machine position signal at the second output (34). Also a method of providing feedback to a machine controller using a simulator.

## Description

This invention was made with Government support under Contract No. N00019-02-3002 awarded by Department of the Navy. The Government may have certain rights in this invention.

The present invention is directed to a method and apparatus for providing feedback to a machine controller, and, more specifically, toward a method and apparatus for simulating the feedback provided by a machine connected to an inverter receiving gating signals from a machine controller when the machine acts as either a motor or a generator.

Aircraft power systems operate in different modes. When aircraft engines are running, some of their rotational energy is used to drive a machine operating as a generator to produce power on a DC bus. Various aircraft electrical systems draw power from this bus. However, before the engines are started, power is often provided by a battery. The battery supplies direct current to an inverter/rectifier which, under the control of a controller, produces AC power to operate the machine as a motor. The motor starts an auxiliary power unit, and, after the auxiliary power unit is running, the machine is switched back to generator mode and generates AC power from the rotating shaft of the auxiliary power unit. This AC power is rectified by the inverter/rectifier and provided to the DC bus. Power from the DC bus is thereafter used to drive a motor for starting the aircraft main engines. Once the main engines are started, the auxiliary power unit is no longer needed. The machine remains in generator mode and is driven by the output of the main engines until the engines are shut down.

The operation of the inverter/rectifier is controlled by a controller, which may comprise, for example, an integrated circuit card (ICC) that provides gating signals to control elements in the inverter/rectifier to produce AC power from a DC input or DC power from an AC input. Controllers can be programmed in various manners to operate different types of inverter/rectifiers and to operate under various conditions of load and power. In order to test these controllers, it has heretofore generally been necessary to connect their outputs to an inverter/rectifier and to a generator or motor or device that functions in either a motor or generator mode to see how the devices function in response to various controller commands. Such a testing procedure generally requires participation by both software and circuit designers, who are knowledgeable about programming and controller design, and systems engineers who are familiar with motors and generators and are skilled in handling the high voltages and currents that are produced by the systems. It would be desirable to provide a system and method for simulating the environment in which the controller operates in a manner that provides suitable feedback to the controller without requiring connection to an actual inverter/rectifier or machine and that does not require the use of the relatively high voltages and currents that are typically used in by such machines.

These problems and others are addressed by various embodiments of the present invention which comprises, in a first aspect, a simulator having at least one input and first and second outputs. The simulator incudes an inverter model that receives gating signals at its input and produces current and voltage signals based on the gating signals, The simulator also includes a machine model that receives the current and voltage signals from the inverter model and produces a machine current signal at the first output and a machine position signal at the second output.

Another aspect of the invention comprises a method of providing feedback to a machine controller adapted to control a machine acting as either a generator or a motor that involves providing an inverter simulator, receiving gating signals from the machine controller at the inverter simulator and producing voltage and current signals based on the gating signals. A first output is provided that represents a current produced by a machine that receiving a voltage and a current represented by the voltage and current signals. A second output is produced that represents a position of a machine receiving the voltage and current represented by the voltage and current signals, An input of the machine controller is connected to either a voltage signal representing a voltage across the modeled machine or a load connected to the modeled machine.

A further aspect of the invention comprises a simulator having at least one input and first, second and third outputs that includes an inverter model receiving gating signals at the at least one input and producing current and voltage signals based on said gating signals. The simulator also includes a machine model that receives the current and voltage signals from the inverter model and produces a machine current signal at the first output and a machine position signal at the second output. A voltage source and a circuit simulating a given load are provided as is a switch for selectably connecting the third output to either the voltage source or the load.

### In the Drawings;

These aspects and features of the invention and others will be better understood after a reading of the following detailed description in connection with the following drawings wherein:

Figure 1 schematically illustrates a controller connected to a simulator including an inverter model and a machine model according to an embodiment of the present invention; and

Figure 2 schematically illustrates the machine model of Figure 1.

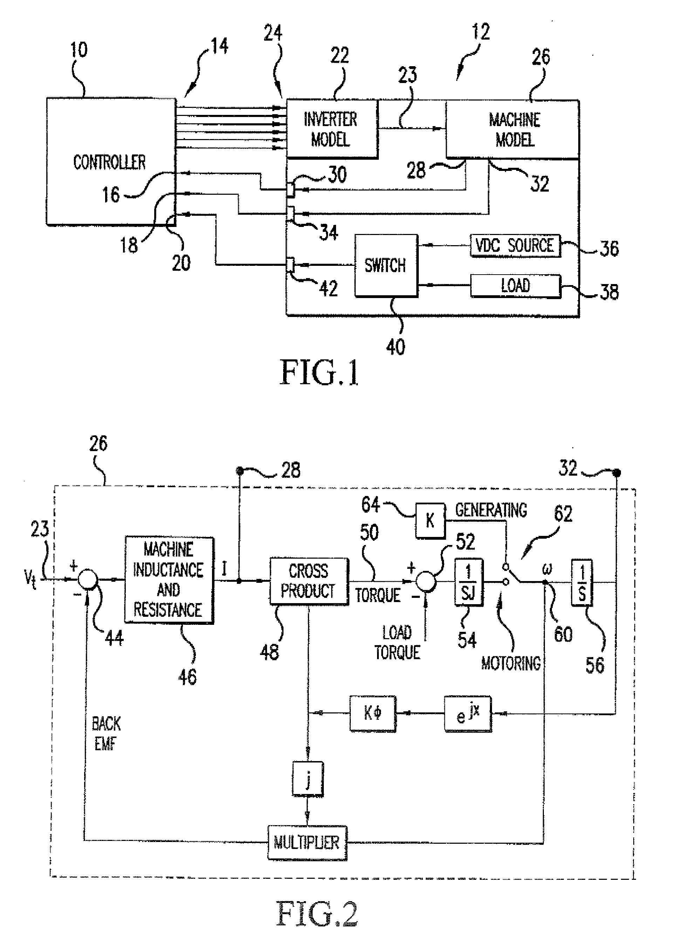

Referring now to the drawings, wherein the showings are for the purpose of illustrating preferred embodiments of the invention only, and not for the purpose of limiting same, Figure 1 illustrates a controller 10 connected to a simulator 12 according to an embodiment of the present invention. Controller 10 may comprise, for example, an integrated circuit card (ICC). The controller 10 includes a plurality of gating signal outputs 14, a first input 16, a second input 18 and a third input 20. Simulator 12 comprises an inverter model 22 that receives gating signals output by the plurality of gating signal outputs 14 at inputs 24. Inverter model 22 may comprise, for example, a look-up table and will produce the effective voltages in the dq reference frame. The machine current is computed in the dq reference frame. Inverter model 22 produces output signals on line 23 representing the voltage signals that would be produced by an actual inverter receiving such gating signals. These signals are generally on the order of a few volts, less than about 10 volts, for example.

These current and voltage signals are output to a machine model 26, illustrated in greater detail in Figure 2. Machine model 26 includes a current output 28 for outputting a current signal to simulator first output 30 and a position signal output 32 for outputting a position signal to simulator second output 34. The current output is at a relatively low voltage, such as around 0.1 amps. Simulator 12 further includes a voltage source 36, a load 38, and a switch 40 for selectably connecting one of voltage source 36 and load 38 to simulator third output 42.

With reference to Figure 2, inverter model output line 23 enters machine model 26 and provides a first input to a analog summer 44. The second input to comparator 44 comprises a signal representing the back EMF produced by the machine being modeled, as will be discussed hereafter. The output of analog summer 44 represents the voltage across the machine reactance. The machine current, I, is computed according to the machine reactance (based on the known resistances and inductances of the machine and modeled as circuit 46) and its potential differences. The resulting current signals are provided to controller 10 via simulator first output 28. At circuit 48, the machine current I is cross multiplied with the machine flux vector k to produce a signal representing machine torque, and this signal is output on line 50 to a summer 52. Summer 52 also receives as input a load torque TL, which is positive when the machine is operating in a motoring state. The output of summer 52 is a signal representing the net torque available for driving the machine. At integrator 54, this net torque is integrated and multiplied by a gain of 1/J to produce a signal representing the machine speed at node 60. The machine speed is integrated by integrator 56 to produce an output representing rotor position on second output 32 to simulator second output 34. Meanwhile, the back EMF, which is compared to the voltage signal on line 23 as discussed earlier, is computed from the flux vector k at the quadrant axis that multiplies to the machine speed

In generating mode, when switch 62 is positioned to connect node 60 to a circuit 64 generating a constant signal representing the rated operating speed of the machine, and this speed is integrated by integrator 56 to produce an output representing rotor position on second output 32 to simulator output 34.

In operation, controller 10 is electrically connected to simulator 12 and caused to send gating signals as if connected to an actual inverter and machine functioning in a motor or generator mode. The above-described circuitry causes simulator 12 to produce current and position output signals corresponding to the signals that controller 10 would receive in actual operation, In addition, simulator 12 includes a voltage source 36. When simulator 12 is in motor mode, that is simulating a machine operating as a motor, switch 40 connects DC voltage source 36 to third output 42 of simulator 12 and provides this voltage signal to third input 20 of controller 10. This voltage represents the voltage provided to controller 10 in the motoring state. When simulator 12 is in generator mode, switch 40 is set to connect a load 38 to third output 42 of simulator 12 and this load is sensed at third input 20 of controller 10 as the load being driven by the generator being simulated.

The present invention has been described herein in terms of a preferred embodiment. However, obvious modifications and additions to the invention will become apparent to those skilled in the relevant arts upon a reading and understanding of the foregoing description. It is intended that all such modifications and additions form a part of the present invention to the extent that they fall within the scope of the several claims appended hereto.

## Claims

1. A simulator (12) having at least one input (24) and first and second outputs (30, 34) comprising:
an inverter model (22) receiving gating signals at the at least one input (24) and producing current and voltage signals based on said gating signals; and
a machine model (26) receiving the current and voltage signals from the inverter model (24) and producing a machine current signal at the first output (30) and a machine position signal at the second output (34).

2. The simulator (12) of claim 1 wherein said simulator (12) includes a third output (42), said third output (42) either outputting a voltage or being connected to a load (38).

3. The simulator (12) of claim 2 including a voltage source (36) and a load (38) and a switch (40) for connecting the third output (42) to either the voltage source (36) or the load (38).

4. The simulator (12) of claim 1 wherein said machine model (26) comprises a model of a generator.

5. The simulator (12) of claim 1 wherein said machine model (26) comprises a model of a motor.

6. The simulator (12) of claim 4 wherein said third output (42) is connected to a load (38).

7. The simulator (12) of claim 5 wherein said third output (42) is connected to a voltage source (36),

8. The simulator (12) of claim 1 wherein said inverter model (22) comprises a look-up table storing a plurality of outputs corresponding to combinations of effective inverter voltage in a dq reference frame.

9. The simulator (12) of claim 1 wherein said inverter voltage signals are less than about 10 volts and said inverter current signals are less than about 0.1 amp.

10. A method of providing feedback to a machine controller adapted to control a machine acting as either a generator or a motor comprising the steps of:
providing an inverter simulator (22);
receiving gating signals from the machine controller (10) at the inverter simulator (22);
producing voltage and current signals based on the gating signals;
producing a first output representing a current produced by a machine receiving a voltage and a current represented by the voltage and current signals;
producing a second output representing a position of a machine receiving the voltage and current represented by the voltage and current signals; and
connecting to an input of the machine controller (20) either a voltage signal representing a voltage across the modeled machine or a load connected to the modeled machine.
